Europäisches Patentamt

European Patent Office

Office européen des brevets

(19)

(11) Veröffentlichungsnummer : **0 534 234 B1**

(12) **EUROPÄISCHE PATENTSCHRIFT**

(45) Veröffentlichungstag der Patentschrift :
**15.03.95 Patentblatt 95/11**

(51) Int. Cl.⁶ : **H01F 1/37, H01F 1/28**

(21) Anmeldenummer : **92115457.1**

(22) Anmeldetag : **10.09.92**

(54) **Magnetorheologische Flüssigkeit.**

(30) Priorität : **25.09.91 DE 4131846**

(43) Veröffentlichungstag der Anmeldung :
**31.03.93 Patentblatt 93/13**

(45) Bekanntmachung des Hinweises auf die
Patenterteilung :
**15.03.95 Patentblatt 95/11**

(84) Benannte Vertragsstaaten :
**BE DE ES FR GB NL SE**

(56) Entgegenhaltungen :
**FR-A- 1 071 708**
**FR-A- 1 306 142**
**CHEMICAL ABSTRACTS, vol. 87, no. 26, 26.**
**Dezember 1977, Columbus, Ohio, US;abstract**
**no. 210360q, Seite 580 ;Spalte 1 ;**

(56) Entgegenhaltungen :
**CHEMICAL ABSTRACTS, vol. 92, no. 12, 1981,**
**Columbus, Ohio, US; abstract no.103229k,**
**Seite 615 ;Spalte 1 ;**
**PATENT ABSTRACTS OF JAPAN vol. 15, no.**
**502 (E-1147)18. Dezember 1991**

(73) Patentinhaber : **BASF Aktiengesellschaft**
**Carl-Bosch-Strasse 38**
**D-67063 Ludwigshafen (DE)**

(72) Erfinder : **Kormann, Claudius, Dr.**
**Hirschgasse 18a**
**W-6707 Schifferstadt (DE)**
Erfinder : **Schwab, Ekkehard, Dr.**
**Berwartsteinstrasse 4**
**W-6730 Neustadt (DE)**
Erfinder : **Laun, Martin, Dr.**
**Duererstrasse 22**
**W-6700 Ludwigshafen (DE)**

## Beschreibung

Die Erfindung betrifft eine magnetorheologische Flüssigkeit, im wesentlichen bestehend aus magnetischen Teilchen, die mit einem Polyelektrolyten beschichtet und in einer polaren Flüssigkeit suspendiert sind.

Magnetorheologische Flüssigkeiten sind fließfähige Medien, deren Fließeigenschaften sich unter dem Einfluß eines Magnetfeldes schnell und reversibel ändern. Der hierbei auftretende magnetorheologische Effekt entspricht der durch ein Magnetfeld hervorgerufenen Schubspannungserhöhung, dem Produkt aus der Schergeschwindigkeit und der Viskositätsänderung im Magnetfeld.

Derartige Flüssigkeiten sind an sich bekannt. Es handelt sich dabei stets um Suspensionen von magnetischen Feststoffen in einer Flüssigkeit unter Zusatz von Mitteln zur Sedimentationsstabilisierung. Untersuchungen von solchen Medien führten u.a. R.E. Rosenzweig et al. (J. Colloid and Interface Science, Vol. 29 (4), 680-686, 1969) durch. Danach ergaben sich für hochkonzentrierte und verdünnte Magnetfluide auf Kohlenwasserstoffbasis bei Sättigungsmagnetisierungen von bis zu 420 Gauß und Schergefällen von bis zu 230 $s^{-1}$ in Magnetfeldern von bis zu 1700 kA/m magnetorheologische Effekte in der Größenordnung von lediglich 1 Pa. Untersuchungen über das magnetorheologische Fließverhalten von magnetischen Flüssigkeiten auf Kohlenwasserstoff-, Ester- und Wasserbasis wurden auch von Kamiyama et al. (ISME International Journal 1987, Vol. 30, No. 263, 761-766) vorgenommen. Bei Schergeschwindigkeiten von 50 bis 1 000 $s^{-1}$ und maximalen Feldstärken von 320 kA/m betrug danach der magnetorheologische Effekt von Kohlenwasserstoff- und Esterfluids weniger als 10 Pa, bei wäßrigen magnetischen Flüssigkeiten, d.h. Suspension von Magnetpigmenten, welche mit Tensiden stabilisiert sind, ergab sich ein magnetorheologischer Effekt von etwa 30 Pa. Magnetische Flüssigkeiten, welche mit Hilfe von Tensiden sedimentationsstabil gehalten werden, neigen jedoch stark zum Schäumen. Auch ist das Trägermedium Wasser wegen seiner ungünstigen Korrosion und Gefrierpunkteigenschaften äußerst problematisch. Dies gilt auch für die wäßrigen magnetischen Flüssigkeiten, die in der FR-A 2 461 521, jedoch ohne Angaben zu den magnetorheologischen Eigenschaften beschrieben sind.

Diese magnetorheologischen Flüssigkeiten, die sich von magnetischen Flüssigkeiten, welche vor allem in Lagern, Drehdurchführungen und Dämpfern zur Anwendung gelangen, durch ihre Viskositätsänderung im Magnetfeld unterscheiden, werden in zunehmendem Maße bei der Konstruktion von Kupplungen und Stoßdämpfern vorgeschlagen. Solche Systeme werden beispielsweise in der US-A 2 661 596 beschrieben. Hierbei gelangen Mischungen aus Carbonyleisenpigmenten, Ölsäure und Öl als Medien für hydraulische Vorrichtungen zur Anwendung. Durch einen Zusatz von Seifen wird zudem die Viskosität im feldfreien Zustand erhöht. Gemäß der US-A 4 957 644 werden für magnetisch steuerbare Kupplungen Ferrofluids aus Carbonyleisenpigmenten mit Teilchengrößen über 1 μm in unpolaren organischen Lösungsmitteln eingesetzt. Mit dem Zusatz bestimmter niedermolekularer Komplexbildner sollte die Sedimentationsstabilität verbessert werden, was jedoch in Anbetracht der ziemlich großen Magnetteilchen nicht in ausreichendem Maße gelang. Auch in der EP-A 406 692 wird eine durch magnetische Felder beeinflußbare Flüssigkeit aus in Kohlenstoffasern eingebetteten Carbonyleisenpigmenten in einem Trägeröl ohne genauere Angaben zu dem magnetorheologischen Effekt beschrieben. Im Gegensatz zu den genannten, auf der Basis meist grobteiliger magnetischer Materialien aufgebauter Medien zeichnen sich magnetische Flüssigkeiten mit feinen, z.B. superparamagnetischen Ferriten in Kohlenwasserstoffen oder Estern zwar durch eine infolge der geringen Teilchengröße niedrigen Abrasivität, durch kurze Schaltzeiten und ein günstiges Sedimentationsverhalten aus, doch sind die für die Übertragung von Kräften erforderlichen magnetorheologischen Effekte von nur 1 bis 10 Pa zu klein.

Aufgabe der vorliegenden Erfindung war es daher, magnetorheologische Flüssigkeiten bereitzustellen, welche sich durch einen hohen magnetorheologischen Effekt auszeichnen und gleichzeitig eine niedrige Grundviskosität, eine geringe Abrasivität, kurze Schaltzeiten und eine gute Sedimentationsstabilität aufweisen. Außerdem bestand die Aufgabe darin, daß dieses Medium nicht korrosiv wirkt und sowohl bei hohen als auch bei niedrigen Temperaturen beständig ist.

Es wurde nun gefunden, daß sich die Aufgabe mit einer magnetorheologischen Flüssigkeit lösen läßt, die im wesentlichen aus magnetischen Teilchen mit einer Teilchengröße von kleiner 1 μm, welche mit einem Polyelektrolyten mit einem Molekulargewicht von 500 bis 250 000 beschichtet und in einem polaren, gegebenenfalls zusätzlich Wasser enthaltenden Lösungsmittel mit einem Siedepunkt von mindestens 100°C suspendiert sind, besteht und deren magnetorheologischer Effekt, gemessen in einem Magnetfeld von 100 kA/m, mehr als 100 Pa beträgt.

Die erfindungsgemäßen magnetorheologischen Flüssigkeiten weisen eine niedrige Anfangsviskosität, welche für das Erreichen eines hohen magnetorheologischen Effektes wesentlich ist, auf. Im Magnetfeld findet dann eine Art Verzahnung der beschichteten magnetischen Teilchen statt und die dadurch entstandenen Strukturen setzen dem fließenden Medium einen erhöhten Widerstand entgegen, die Viskosität nimmt zu. Nach dem Ausschalten des Magnetfeldes lösen sich die Magnetteilchen infolge der elektrostatischen Abstoßung wieder voneinander, so daß die Suspension wieder dünnflüssig wird.

Als magnetische Materialien für die erfindungsgemäßen Flüssigkeiten lassen sich sowohl hartmagnetische als auch weichmagnetische, isometrische und auch anisometrische magnetische Teilchen einsetzen, sofern ihre mittlere Teilchengröße kleiner 1 μm ist. Selbstverständlich können auch Mischungen unterschiedlicher Magnetpigmente oder Mischungen von magnetischen mit nichtmagnetischen Substanzen eingesetzt werden. Bevorzugte Substanzklassen sind superparamagnetische Eisenoxide wie $Fe_3O_4$, $\gamma\text{-}Fe_2O_3$, Berthollide sowie insbesondere die in der US-A 4 810 401 beschriebenen Ferrite der Zusammensetzung $M_vMn_wZn_xFe_yO_z$. Ferner kommen feinteilige Pigmente, wie sie auch für magnetische Aufzeichnungszwecke verwendet werden, d.h. $\gamma\text{-}Fe_2O_3$, $CrO_2$, Kobalt, Reineisen- und Carbonyleisenpigmente, Kobalt- und Barium-dotierte Ferrite sowie Eisennitride in Betracht. Der magnetorheologische Effekt steigt im allgemeinen sowohl mit der spezifischen Sättigungsmagnetisierung der Materialien als auch mit der Magnetfeldstärke an. Infolge der Feinheit der Pigmente kann der Umschaltvorgang besonders schnell erfolgen.

Diese magnetischen Materialien sind in den erfindungsgemäßen magnetorheologischen Flüssigkeiten mit Polyelektrolyten zur Dispergierung und Vikositätserniedrigung beschichtet. Die Polyelektrolyte bewirken eine Erhöhung der Oberflächenladung der Feststoffteilchen. Wesentlich ist hierbei der pH-Wert, durch den die rheologischen Eigenschaften der Suspension beeinflußt werden. Durch Variation des pH-Werts kann die Ladungsträgerkonzentration in den Polyelektrolyten auf geeignete Weise eingestellt werden. Bei Verwendung anionischer Polyelektrolyte hat es sich als zweckmäßig herausgestellt, daß der pH-Wert größer ist als deren Säurekonstante (pKa-Wert), während bei kationischen Polyelektrolyten der pH-Wert vorzugsweise kleiner ist als der pKa-Wert. Weiterhin lassen sich durch Einstellen der Ionenstärke die Fließeigenschaften günstig beeinflussen. Geeignet ist eine Vielzahl von Polyelektrolyten mit einem Molekulargewicht zwischen 500 und 250 000. Bevorzugt weisen diese Polymere 5 bis 1000 Ladungen im Molekülgerüst auf. Besonders geeignet sind Polyelektrolyte aus der Gruppe Polyacrylat, Acrylsäure/Acrylamid-Copolymere, modifizierte Polyacrylate, phosphonomethylierte Polycarboxylate, Polyvinylphosphonsäuren, Polyvinylphosphorsäuren, Polyamine, Polyvinylamine, Polysulfonsäuren, Polyphosphorsäuren. Bei den Polyacrylaten hat sich ein pH-Bereich zwischen 4 und 12 als besonders vorteilhaft erwiesen. Außer den genannten Polyelektrolyten lassen sich auch noch weitere Liganden, welche die Oberflächenladung erhöhen, einsetzen.

Die in den erfindungsgemäßen magnetorheologischen Flüssigkeiten enthaltenen Trägermedien sind polare Lösungsmittel, welche mindestens eine geringe Löslichkeit für Wasser aufweisen. Dies sind Alkohole, Ether und Ester sowie Mischungen derselben. Während wasserfreie magnetorheologische Flüssigkeiten durch vollständiges Abziehen des Wassers bei vermindertem Druck herstellbar sind, verbessert ein geringer Wassergehalt die Dispersions- und Fließeigenschaften der magnetischen Flüssigkeit. Zweckmäßigerweise soll der Wassergehalt in der endgültigen Zusammensetzung 20 Gew.-% nicht überschreiten. Beispiele geeigneter polarer Flüssigkeiten sind Alkohole und Ether wie Diethylenglykolmethylether, Diethylenglykolmono- und diethylether oder Diethylenglykolmonomethylether, $C_2\text{-}C_6$-Alkylester von $C_1\text{-}C_6$-Alkanmonocarbonsäuren, wie Essigsäurehexylester, Essigsäurecyclohexylester, Propionsäurepentylester, Buttersäureethylester, Pentancarbonsäuremethylester, Pentancarbonsäureethylenester oder Hexancarbonsäuremethylester; oder $C_1\text{-}C_6$-Dialkylester von $C_1\text{-}C_7$-Alkandicarbonsäuren wie Malonsäuredihexylester, Bernsteinsäuredihexylester, Glutarsäuredipentylester, Adipinsäuredi-n-butylester, Pimelinsäuredi-n-butylester, Hexandicarbonsäuredi-n-propylester oder Azelainsäurediethylester. Insbesondere geeignet sind Ethylenglykol, Diethylenglykol, Glyzerin, Polyethylenglykol, Oligo- (z.B. Tetra-)methylenglykoldimethylether.

Die Zusammensetzung der magnetorheologischen Flüssigkeit ist in gewissen Grenzen variabel. So beträgt der Feststoffgehalt vorzugsweise 10 bis 80 Gew.-% und insbesondere 20 bis 60 Gew.-%.

Die derart aufgebauten erfindungsgemäßen magnetorheologischen Flüssigkeiten bleiben wegen der äußerst geringen Sedimentationsneigung, die beispielsweise nach 1 Woche Lagerung geringer als 10 % ist, unbegrenzt fließfähig, so daß sie sich in hervorragender Weise für hydraulische Vorrichtungen, wie z.B. für Stoßdämpfer eignen. Durch das weitgehend wasserfreie Trägermedium werden günstige Korrosionseigenschaften sowie die Frostschutzbeständigkeit erreicht. Weiterhin ist wesentlich, daß sie bei Schergeschwindigkeiten von 10 $s^{-1}$ Viskositäten von unter 10 Pas aufweisen und in einem Magnetfeld von 100 kA/m magnetorheologische Effekte von mehr als 100 Pa und vorzugsweise bis zu 10.000 Pa ergeben. Nachfolgend sei die Erfindung beispielsweise erläutert.

Die in den folgenden Beispielen gemessene BET-Oberfläche wurde gemäß DIN 66 132 mittels eines Ströhlein-Areameters der Firma Ströhlein, Düsseldorf, nach dem Einpunkt-Differenz-Verfahren nach Haul und Dümbgen bestimmt.

Das Sedimentationsverhalten wurde mit einem ortsauflösenden Suszeptibilitätsmeßgerät gemessen und die monotone Verteilung der magnetischen Substanz bestimmt.

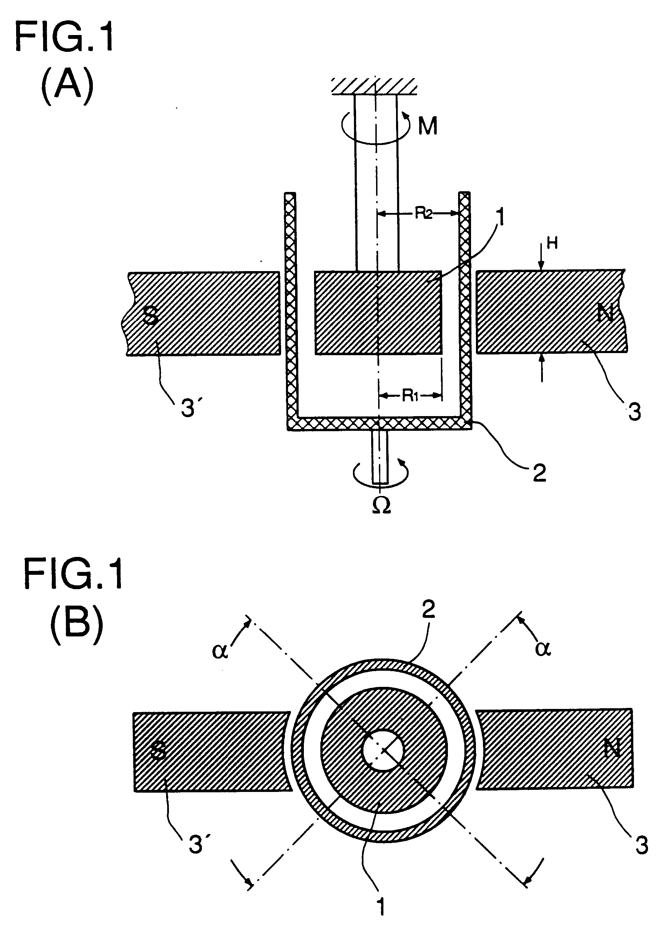

Der magnetorheologische Effekt wurde mit einem Couette-Rheometer CRM mit überlagertem Magnetfeld von 100 kA/m bei Raumtemperatur gemessen. Die verwendete Couette-Meßanordnung mit überlagertem Magnetfeld ist in den Figuren 1a (Seitenansicht) und 1b (Draufsicht) dargestellt. Dabei befindet sich die Meßprobe im Spalt zwischen einem zylinderförmigen, feststehenden Eisen-Stator 1 mit dem Radius $R_1$ und einem mit der Winkelgeschwindigkeit $\Omega$ rotierenden Polyamid-Becher 2 mit dem Innenradius $R_2$. Gemessen wird das auf den Stator einwirkende Drehmoment M. Ist H die Höhe des Stators, folgt die Wand-Schubspannung $\tau$ am Stator im feldfreien Fall zu

$$\tau = \frac{M}{2\pi\, R_1{}^2 H}$$

Die scheinbare Wandschergeschwindigkeit $\gamma$ (Wandgleiten vernachlässigt) ergibt sich zu

$$\dot{\gamma} = \frac{\Omega}{1 - (R_1/R_2)^2}$$

Durch die Geometrie der Polschuhe 3 und 3′ bedingt, befinden sich nur Teile der Probe innerhalb der beiden Sektoren mit dem Winkel $\alpha$ (in rad) im Magnetfeld. Erhöht sich unter dem Einfluß eines senkrecht zur Scherebene stehenden Magnetfeldes die bei konstant gehaltener Schergeschwindigkeit gemessene Schubspannung vom feldfreien Wert $\tau$ auf den Wert $\tau_M = \tau + \Delta\,\tau_M$, so führt dies bei der in Figur 1 gezeigten Geometrie zu einer Erhöhung des Drehmomentes vom Wert M auf $M_M$:

$$M_M/M = 1 + (\alpha/\pi)\,(\Delta\,\tau_M/\tau)$$

Der magnetorheologische Effekt folgt aus dem Drehmomentverhältnis zu

$$\Delta\,\tau_M/\tau = (M_M/M - 1)/(\alpha/\pi)\,.$$

Der magnetorheologische Effekt wurde bei einem Feld von 100 kA/m im Meßspalt zwischen Polschuhen und Stator gemessen.

## Beispiel 1

Eine Lösung aus 1084,6 g Eisen(III)chlorid-Hexahydrat, 139,9 g Mangan(II)chlorid-Tetrahydrat,375,4 g Eisen(II)chlorid-Dihydrat in 1200 ml Wasser wurde bei einer Temperatur von 30°C zu einer Lösung von 689,2 g Natronlauge, 38,4 g Zinkoxid in 690 ml Wasser in 1 h zugetropft.

Nach erfolgter Fällung wurde ein pH von 10,8 gemessen. Es wurde auf 70°C erhitzt, 1 Stunde lang bei dieser Temperatur gehalten und nach Abkühlen auf Raumtemperatur ein pH von 9 eingestellt. Die entstandene Ferritsuspension wurde filtriert und chloridfrei gewaschen. Der derart erhaltene Mangan-Zink-Ferrit $(Mn_{0,3}Zn_{0,2}Fe_{2,5}O_4)$ ist nach dem Trocknen bei 80°C folgendermaßen charakterisiert: spez. Oberfläche $SN_2 = 97\ m^2/g$. Magnetisierung $M_m/\rho = 76\ nTm^3/g$.

940 g dieses Filterkuchens, welcher 435 g Ferrit und 505 g Wasser enthält, wurde mit 335 g Ethylenglykol versetzt. Am Rotationsverdampfer wurde bei einer Temperatur von 65°C unter Vakuum das Wasser bis auf eine geringe Restmenge (ca. 40 g) abgezogen. Es wurde eine Mischung aus 59 g des Natriumsalzes einer Polyacrylsäure mit dem Molekulargewicht von 4 000 und 72 ml Wasser hinzugerührt. Danach wurde die Suspension unter Einwirkung hoher Scherkräfte mit einem Ultra Turrax Dispergiergerät 20 Minuten lang dispergiert. Nach 3 Tagen Lagerung wurde abdekantiert. Es wurden schließlich 720 g Suspension folgender Zusammensetzung erhalten: 45 Gew.-% Ferrit, 7 Gew.-% Polyacrylat, 12 Gew.-% Wasser, 36 Gew.-% Ethylenglykol. Der pH betrug 11,9. Das Sedimentationsverhalten wurde nach 1 Woche mit einem ortsauflösenden Suszeptibilitätsmeßgerät charakterisiert: am Boden einer 10 cm hohen Flüssigkeitssäule war die Konzentration des magnetischen Pigments um etwa 7 % höher als am oberen Ende.

Der magnetorheologische Effekt betrug im Schergeschwindigkeitsbereich von 7 bis 700 $s^{-1}$ 100 - 110 Pa. Die Viskosität bei einem Schergefälle von 10 $s^{-1}$ betrug 3 Pas.

## Beispiel 2

Eine Lösung aus 9,25 kg Eisen(III)chlorid, 5,25 kg Eisen(II)chlorid-Dihydrat, 0,9 kg Zinkchlorid und 2,0 kg Mangan(II)chlorid-Tetrahydrat in 25 l Wasser mit einem Zusatz von 50 ml konz. HCl wurde bei einer Temperatur von 26±°C zu einer Lösung von 10,2 kg Natronlauge in 38 l Wasser in 1 h zugetropft.

Nach erfolgter Fällung wurde ein pH von 10,4 gemessen. Es wurde auf 70°C erhitzt, 1 Stunde lang bei dieser Temperatur gehalten und nach Abkühlen auf Raumtemperatur ein pH von 9 eingestellt. Die entstandene Ferritsuspension wurde filtriert und chloridfrei gewaschen. Der derart erhaltene Mangan-Zink-Ferrit $(Mn_{0,3}Zn_{0,2}Fe_{2,5}O_4)$ ist nach dem Trocknen bei 80°C folgendermaßen charakterisiert: $SN_2 = 93\ m^2/g$, $Mg/\rho = 79\ nTm^3/g$.

397 g des, wie zuvor beschrieben erhaltenen Filterkuchens, welcher 100 g Ferrit und 297 g Wasser enthält, wurde mit einer Mischung aus 20 g des Natriumsalzes einer Polyacrylsäure mit dem Molekulargewicht von 4000 und 24 g Wasser verrührt. Es wurden 100 g Ethylenglykol zugegeben, und die Suspension wurde unter Einwirkung hoher Scherkräfte mit einem Ultra Turrax Dispergiergerät 1 Stunde lang dispergiert.

Anschließend wurde das Wasser am Rotationsverdampfer bei 65°C unter Wasserstrahlvakuum abgezogen. Es wurden schließlich 221 g Suspension folgender Zusammensetzung erhalten: 47 Gew.-% Ferrit, 7 Gew.-% Polyacrylat, 1 Gew.-% Wasser, 45 Gew.-% Ethylenglykol. Der pH betrug ca. 10,7.

Das Sedimentationsverhalten wurde nach 1 Woche mit einem ortsauflösenden Suszeptibilitätsmeßgerät charakterisiert: die Konzentration des magnetischen Pigments am Boden einer 10 cm hohen Füllung war genauso hoch wie am oberen Rand. Der magnetorheologische Effekt in einem Feld von 100 kA/m betrug 330 Pa. Die Viskosität bei einem Schergefälle von 25 s$^{-1}$ betrug 4 Pas.

Vergleichsversuch 1

100 g Carbonyleisenpigment mit einer durchschnittlichen Teilchengröße von 2 bis 4 μm wurde mit 20 g Ölsäure und 80 g eines unpolaren Öls versetzt und 10 Minuten lang unter Einwirkung hoher Scherkräfte mit dem in Beispiel 2 beschriebenen Gerät dispergiert. Die entstandene Suspension ist als magnetorheologische Flüssigkeit ungeeignet, da sie stark sedimentiert: Bereits nach 1 Stunde hatte sich ein kompaktes, nicht fließfähiges Sediment gebildet, überschichtet von klarem Öl.

Vergleichsversuch 2

150 g Carbonyleisenpigment mit einer durchschnittlichen Teilchengröße von 2 bis 4 μm wurde mit 30 g Tributylphosphat, 10 g Na$_2$EDTA und 50 g unpolarem Öl versetzt und auf dem Rollgestell 15 Stunden lang homogenisiert.

Auch diese Suspension war ungeeignet, da sie eine starke Sedimentationsneigung zeigt. Bereits nach 1 Tag Lagerung hatte sich eine 10 cm hohe Füllung in 5 cm kompaktes Sediment und eine ebenso hohe Schicht pigmentfreies Öl aufgetrennt.

Beispiel 3

50 g eines handelsüblichen Reineisenpigments mit einer BET-Oberfläche von 53 m²/g, (Mm/ ρ = 145 nTm³/g,

Mr/ ρ = 70 nTm³/g) wurden mit 10 g einer 45 gew.-%igen Lösung des Natriumsalzes einer Polyacrylsäure mit dem Molekulargewicht 4000, mit 90 g Ethylenglykol sowie 150 g Wasser versetzt. Die Mischung wurde unter Einwirkung hoher Scherkräfte 15 Minuten lang dispergiert. Anschließend wurde das Wasser am Rotationsverdampfer bei 65°C unter Wasserstrahlvakuum abgezogen. Es wurden schließlich 151 g Suspension folgender Zusammensetzung erhalten: 33 Gew.-% Metallpigment, 3 Gew.-% Polyacrylat, ca. 4 Gew.-% Wasser, 60 Gew.-% Ethylenglykol. Der magnetorheologische Effekt in einem Feld von 100 kA/m betrug 1000 Pa. Die Viskosität bei einem Schergefälle von 25 s$^{-1}$ betrug 6 Pas.

Beispiel 4

Die im folgenden beschriebenen magnetorheologischen Flüssigkeiten werden nach einer einheitlichen Vorschrift hergestellt. Die Pigmenteigenschaften (BET, M$_m$/ρ) sowie die Mengenverhältnisse von Pigment, Dispergiermittel und Lösungsmittel werden gemäß der Tabelle gewählt. Das Pigment (jeweils 100 g) wird in Form eines feuchten Filterkuchens oder mit Wasser angeteigt (Feststoffgehalt 20 - 35 Gew.-%) eingesetzt. Es wird sodann mit einer wäßrigen (ca. 10 - 50 Gew.-%) Lösung des Dispergiermittels sowie der in der Tabelle angegebenen Menge des Lösungsmittels Triethylenglykol vermischt. Das Dispergiermittel wurde durch Neutralisation der sauren Form des Polyelektrolyten mit NaOH bzw. LiOH bis zu einem pH von 9 - 11 erhalten. Die in der Tabelle angegebene Menge des Dispergiermittels bezieht sich dabei auf den Feststoffgehalt einschließlich der Kationen. Eine pH-Messung und gegebenenfalls pH-Korrektur bis zu dem in der Tabelle angegebenen pH-Wert erfolgt nach dem Dispergierschritt. Der Dispergierschritt ist das 1-stündige Behandeln der Mischung mit einem Ultra Turrax Dispergiergerät. Die Trocknung der dispergierten Mischung, ein Vorgang der etwa 4 bis 21 Stunden dauert und über die Gewichtsabnahme verfolgt wird, erfolgt zuletzt in einem Rotationsverdampfer bei 120 - 140°C/Normaldruck sowie anschließend Vakuum. Die Sättigungsmagnetisierung Ms [Gauss] wird am getrockneten Fluid gemessen. Sie kann wie folgt berechnet werden: Ms = 10 x Dichte x Mm/ρ. Vor der Messung der magnetorheologischen Eigenschaften werden die Proben vorgeschert: Die Proben werden bei 80°C in den Meßbecher eingefüllt und unter Scherung (700 Pa Schubspannung) auf 25°C abgekühlt. Dann wird die Viskosität (ohne Feld) bei einer Schergeschwindigkeit von γ = 26 s$^{-1}$ gemessen. Nach Einschalten eines Magnetfeldes von 160 kA/m erfolgt die Messung des magnetorheologischen Effekts bei derselben Schergeschwindigkeit.

Tabelle

| Pigment | BET m$^2$/g | Mm/ϱ nTm$^3$/g | Dispergiermittel (Molgewicht) | Lösungsmittel | pH | Ms [G] | MR Effekt [Pa] | Viskosi-tät [Pas] |
|---|---|---|---|---|---|---|---|---|
| 100 g MnZnFerrit | 67 | 81 | 5 g Na-PA§(Mg 4000) | 130 g Triethylen-glykol | 10 | 560 | 400 | 2,5 |
| 100 g MnZnFerrit | 88 | 79 | 15 g Na-PA(Mg 1200) | 120 g Triethylen-glykol | 9,7 | 610 | 600 | 3 |
| 100 g MnZnFerrit | 88 | 79 | 15 g Li-PA(Mg 4000) | 150 g Triethylen-glykol | 9,8 | 520 | 1000 | 5,5 |
| 100 g Fällungs-magnetit | 56 | 83 | 15 g Na-PA(Mg 4000) | 135 g Triethylen-glykol | 9 | 560 | 1300 | 4,2 |
| 95 g MnZnFerrit 5 g nadelf.Fe$_3$O$_4$ | 51 17 | 84 103 | 15 g Na-PA(Mg 4000) | 135 g Triethylen-glykol | 10 | 560 | 850 | 4,5 |
| 95 g MnZnFerrit 5 g Goethit | 51 69 | 84 – | 15 g Na-PA(Mg 4000) | 135 g Triethylen-glykol | 10 | 510 | 1100 | 4,5 |

§ PA = Polyacrylat

EP 0 534 234 B1

EP 0 534 234 B1

Beispiel 5

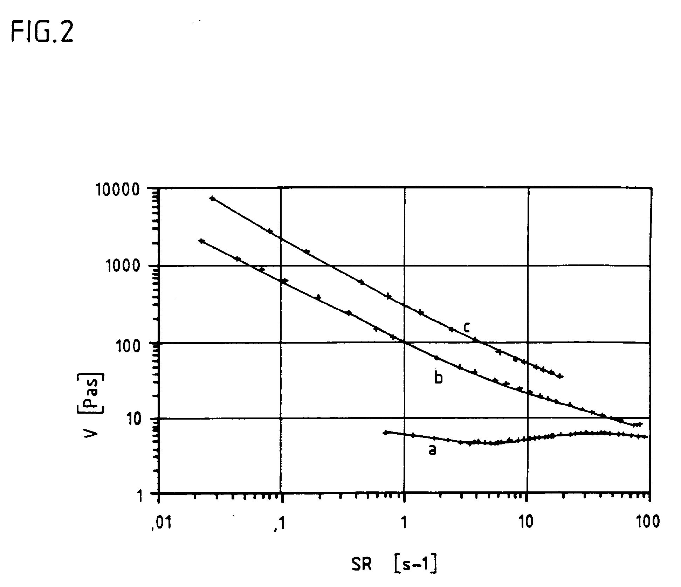

Ein Filterkuchen aus 500 g MnZnFerrit, welches folgendermaßen charakterisiert ist: BET = 51 m²/g, Mm/ρ = 84 nTm³/g, und 1250 g Wasser wird mit einer Lösung von 75 g des Kaliumsalzes der Polyacrylsäure mit dem Molekulargewicht 4000 anderthalb Stunden mit einer Kotthoff-Mischsirene unter Stickstoff homogenisiert und durch Zugabe von 14 g NaOH (50 Gew.-%) auf pH 10 gehalten. Nach Zugabe von 675 g Triethylenglykol wird erneut 20 Minuten lang dispergiert. Es wird ein pH von 9,7 gemessen. Die Hälfte dieser Mischung wird am Rotationsverdampfer getrocknet: Zunächst 5 Stunden bei 120°C/Normaldruck, anschließend 13 Stunden bei 70°C/Vakuum; schließlich wurde die Probe noch 5 Stunden bei Raumtemperatur in einem Laborrührer gerührt. Es wurden 627 g magnetorheologische Flüssigkeit gewonnen. Vor der Messung wurde die Probe bei 80°C in den Meßbecher eingefüllt und unter Scherung (ca. 700 Pa Schubspannung) auf 25°C abgekühlt. Die Viskosität unter Scherung bei 25°C als Funktion der Schergeschwindigkeit SR und der angelegten Magnetfeldstärke ist in der Figur 2 wiedergegeben, wobei die Kurve a ohne Magnetfeld, die Kurve b bei einem Feld von 80 kA/m und die Kurve c bei einem Feld von 160 kA/m gemessen wurde.

Vergleichsversuch 3

Eine magnetische Flüssigkeit, hergestellt auf der Grundlage von Beispiel 28 des US-A 4 810 401, nämlich unter Verwendung eines niedermolekularen Tensids in einem Esteröl, ist folgendermaßen charakterisiert: Sättigungsmagnetisierung: 900 Gauss, Viskosität ohne Magnetfeld bei einer Schergeschwindigkeit von $\gamma$ = 18 s⁻¹: $\eta°$ = 2,0 Pas. Der magnetorheologische Effekt dieser Flüssigkeit (gemessen bei $\gamma$ = 18 s⁻¹) betrug in einem Magnetfeld der Stärke 128 kA/m weniger als 2 Pa.

**Patentansprüche**

1. Magnetorheologische Flüssigkeit, dadurch gekennzeichnet, daß magnetische Teilchen mit einer Teilchengröße von kleiner 1 μm, welche mit einem Polyelektrolyten mit einem Molekulargewicht von 500 bis 250 000 beschichtet und in einem polaren, gegebenenfalls zusätzlich Wasser enthaltenden Lösungsmittel mit einem Siedepunkt von mindestens 100°C suspendiert sind, und der magnetorheologische Effekt, gemessen in einem Magnetfeld von 100 kA/m, mehr als 100 Pa beträgt.

2. Magnetorheologische Flüssigkeit gemäß Anspruch 1, dadurch gekennzeichnet, daß der magnetorheologische Effekt in einem Magnetfeld von 100 kA/m bis zu 10.000 Pa beträgt.

3. Magnetorheologische Flüssigkeit gemäß Anspruch 1, dadurch gekennzeichnet, daß die magnetischen Teilchen in der Flüssigkeit elektrostatisch gegen Sedimentation stabilisiert sind.

4. Magnetorheologische Flüssigkeit gemäß Anspruch 1, dadurch gekennzeichnet, daß ihre Viskosität, gemessen bei einem Schergefälle von 25 s⁻¹, kleiner als 10 Pas ist.

5. Magnetorheologische Flüssigkeit gemäß Anspruch 1, dadurch gekennzeichnet, daß die Sedimentbildung nach einwöchiger Lagerung kleiner als 10 % ist.

**Claims**

1. A magnetorheological fluid, wherein magnetic particles having a particle size of less than 1 μm are coated with a polyelectrolyte having a molecular weight of from 500 to 250,000 and are suspended in a polar solvent which has a boiling point of not less than 100°C, and the magnetorheological effect is more than 100 Pa and up to 10,000 Pa, measured in a magnetic field of 100 kA/m.

2. A magnetorheological fluid as claimed in claim 1, wherein the polar solvent is selected from the group consisting of alcohols, ethers and esters, and additionally contains water in an amount not exceeding 20% by weight.

3. A magnetorheological fluid as claimed in claim 1, wherein the magnetic particles in the fluid are electrostatically stabilized against sedimentation.

7

4.  A magnetorheological fluid as claimed in claim 1, wherein its viscosity is less than 10 Pas, measured at a shear gradient of 25 s⁻¹.

5.  A magnetorheological fluid as claimed in claim 1, wherein sedimentation after storage for one week is less than 10%.


**Revendications**

1.  Liquide magnétorhéologique, caractérisé par le fait que des particules magnétiques d'une grosseur de particules inférieure à 1 µm, qui sont enduites d'un polyélectrolyte d'un poids moléculaire de 500 à 250000, sont en suspension dans un solvant polaire, contenant éventuellement de l'eau additionnelle et d'un point d'ébullition de moins de 100°C et l'effet magnétorhéologique, mesuré dans un champ magnétique de 100 kA/m, est supérieur à 100 Pa.

2.  Liquide magnétorhéologique selon la revendication 1, caractérisé par le fait que l'effet magnétorhéologique dans un champs magnétique de 100 kA/m s'élève jusqu'à 10000 Pa.

3.  Liquide magnétorhéologique selon la revendication 1, caractérisé par le fait que les particules magnétiques dans le liquide sont stabilisées électrostatiquement contre la sédimentation.

4.  Liquide magnétorhéologique selon la revendication 1, caractérisé par le fait que sa viscosité, mesurée pour un gradient de cisaillement de 25 s⁻¹, est inférieure à 10 Pas.

5.  Liquide magnétorhéologique selon la revendication 1, caractérisé par le fait que la formation de sédiment, après un séjour d'une semaine, est inférieure à 10 %.

# FIG.1
## (A)

# FIG.1
## (B)

FIG.2